(19) Europäisches Patentamt
European Patent Office
Office européen des brevets

(11) EP 0 395 902 B1

(12) EUROPÄISCHE PATENTSCHRIFT

(45) Veröffentlichungstag und Bekanntmachung des Hinweises auf die Patenterteilung:
**11.03.1998 Patentblatt 1998/11**

(51) Int. Cl.$^6$: **A01N 59/02**

(21) Anmeldenummer: **90106464.2**

(22) Anmeldetag: **04.04.1990**

# (54) Flüssiges Desinfektionsmittelkonzentrat

Liquid disinfectant concentrate

Concentré désinfectant liquide

(84) Benannte Vertragsstaaten:
**AT BE CH ES FR GB GR IT LI LU NL SE**

(30) Priorität: **05.05.1989 DE 3914827**

(43) Veröffentlichungstag der Anmeldung:
**07.11.1990 Patentblatt 1990/45**

(73) Patentinhaber:
**Schülke & Mayr GmbH**
**22851 Norderstedt (DE)**

(72) Erfinder:
- **Beilfuss, Wolfgang, Dr.**
  **D-2000 Hamburg 33 (DE)**
- **Diehl, Karl-Heinz**
  **D-2000 Norderstedt (DE)**
- **Eggensperger, Heinz, Dr.**
  **D-2000 Hamburg 63 (DE)**
- **Löwer, Bernd, Dr.**
  **D-2000 Hamburg 63 (DE)**

(74) Vertreter: **UEXKÜLL & STOLBERG**
**Patentanwälte**
**Beselerstrasse 4**
**22607 Hamburg (DE)**

(56) Entgegenhaltungen:

| | |
|---|---|
| **EP-A- 0 090 351** | **EP-A- 0 109 279** |
| **EP-A- 0 188 025** | **EP-A- 0 199 385** |
| **EP-A- 0 271 189** | **DE-A- 2 654 164** |
| **DE-A- 3 046 769** | **FR-A- 1 449 711** |
| **US-A- 3 873 696** | **US-A- 4 822 511** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.15.12/3.4

## Beschreibung

Die Erfindung betrifft ein flüssiges Desinfektionsmittelkonzentrat.

Die biozide Wirkung von Peroxymonoschwefelsäure (Caro'sche Säure) und von deren Salzen ist bekannt.

In den US-PS'en 38 73 696 und 35 84 119 sind bakterizide bzw. fungizide Mittel mit einem Gehalt an Salzen der Caro'schen Säure beschrieben.

Aus der DE-PS 30 46 769 ist die Verwendung eines Gemisches aus $KHSO_5$, $K_2SO_4$ und $KHSO_4$ (Caroat) zusammen mit anionischen Tensiden als viruzides Mittel bekannt. Als anionische Tenside sind in der DE-PS 30 46 769 Alkylbenzolsulfonate genannt.

Die bekannten Kombinationen aus Caro'scher Säure bzw. Caroat mit anionischen Tensiden sind für die Herstellung flüssiger Desinfektionsmittelkonzentrate nicht geeignet. Eine flüssige Formulierung aus 10 Gewichtsteilen Caroat, 2,5 Gewichtsteilen Natriumalkylbenzolsulfonat und 87,5 Gewichtsteilen Wasser ist nicht homogen. Aus diesem Grunde sind die in der DE-PS 30 46 769 beschriebenen Desinfektionsmittel TPH5720 und TPH574 pulverförmige Präparate.

Derartige pulverförmige Desinfektionsmittelpräparate sind inzwischen im Handel erhältlich. Sie werden unmittelbar vor dem Einsatz vom Anwender in Wasser gelöst, um gebrauchsfertige Desinfektionsmittellösungen herzustellen. Bei der Anwendungskonzentration, die um ein Vielfaches geringer ist als die Konzentration, die für ein flüssiges Desinfektionsmittelkonzentrat in Betracht zu ziehen ist, spielt die vorstehend beschriebene Unverträglichkeit in Lösung zwischen der Caro'schen Säure und dem anionischen Tensid eine sehr viel geringere Rolle.

Die bekannten pulverförmigen Präparate weisen eine Reihe von Nachteilen auf. Die Dosierung, beispielsweise mit Hilfe eines Meßbechers, ist umständlich. Die besonders praktischen Flüssig-Dosiergeräte sind nicht einsetzbar.

Pulverförmige Präparate enthalten aufgrund anwendungstechnischer Erfordernisse Builder bzw. inerte Bestandteile. Diese tragen im Hinblick auf den eigentlichen Anwendungszweck, d.h. die Desinfektion, nichts bei und können sogar störend wirken. In vielen Fällen verursachen Sie bei der Anwendung Rückstandsbildung. Außerdem erhöhen Inertbestandteile die Salzfracht im Abwasser.

Sowohl bei der Herstellung als auch bei der Verwendung sind pulverförmige Präparate mit unerwünschter Staubbelästigung verbunden. Der Staub kann die Schleimhäute, insbesondere die Nasenschleimhäute reizen. Deshalb sind derartige Präparate aus arbeitsmedizinischer Sicht nicht unbedenklich.

Pulverförmige Desinfektionsmittelpräparate haben den weiteren Nachteil, daß häufig eine nicht unbeträchtliche Zeit erforderlich ist, um sie vollständig in Wasser zu lösen. Weiterhin ist der Energieeinsatz zur Herstellung von pulverförmigen Produkten höher als derjenige zur Herstellung von flüssigen Produkten.

Je größer das Gebinde ist, um so schwerer lassen sich thermische Vorgänge bei aktivsauerstoffhaltigen Feststoffen kontrollieren; dies kann bis hin zu unkontrollierten Zersetzungsreaktionen führen.

Schließlich können Inertstoffe, die in pulverförmigen Präparaten zwangsläufig vorhanden sein müssen, die biozide Wirksamkeit beeinträchtigen. Hinsichtlich der in Frage kommenden Formulierungsbestandteile und deren Menge ist man bei Feststoffpräparaten eingeschränkt.

In der EP-A-188 025 sind wäßrige, verdickte Reinigungsmittel beschrieben, die Peroxymonoschwefelsäure oder deren Salze, eine starke Säure und als verdickend wirkende Tenside Aminoxide, Amine oder kationische Verbindungen enthalten. Es ist ausdrücklich angegeben, das anionische Tenside wie lineare Alkylsulfate, Alkylsulfonate und Alkylbenzolsulfonate nur in geringen Mengen zugesetzt werden dürfen (vergl. EP-A-188 025, Spalte 3, Zeilen 61-65).

Auf dem Markt befinden sich bislang keine flüssigen, stabilen Desinfektionsmittelkonzentrate auf Basis von Peroxymonoschwefelsäure und/oder deren Salzen. Das spricht dafür, das Probleme der Stabilität und anwendungstechnische Probleme bei solchen flüssigen Formulierungen bislang nicht befriedigend gelöst sind.

Aus der EP-A-0 271 189 ist eine saure wäßrige Reinigungszusammensetzung bekannt, die als Hauptkomponenten Peroxymonosulfat als sauerstoffliefernde Komponente und lineare Alkylarylsulfonsäure als Tensid- und Stabilisierungskomponente enthält. Ferner kann mit alkyliertem Diphenyloxiddisulfonat in geringer Menge ein zusätzlicher als Hydrotrop fungierender Hilfsstoff vorhanden sein.

Aufgabe der Erfindung ist es, ein lagerstabiles, flüssiges Desinfektionsmittelkonzentrat zu schaffen, das als Aktivsauerstoffkomponente Peroxymonoschwefelsäure und/oder deren Salze enthält und eine für ein Handelsprodukt ausreichende Stabilität sowie befriedigende anwendungstechnische Eigenschaften aufweist.

Die Aufgabe wird durch ein flüssiges Desinfektionsmittelkonzentrat gelöst, welches

A) als Aktivsauerstoffkomponente Peroxymonoschwefelsäure und/oder deren Salze,

B) als Tensidkomponete überwiegend oder ausschließlich aromatischen Sulfonsäuren der Formel

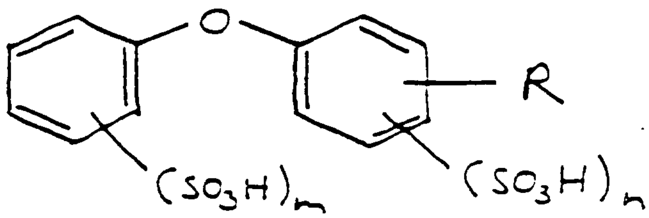

in der R ein verzweigter oder linearer Alkylrest mit 8 bis 18 Kohlenstoffatomen ist und m und n jeweils 0 oder 1 mit der Maßgabe sind, daß die Summe m + n entweder 1 oder 2 ist, und/oder deren Salze,
und gegebenenfalls zusätzlich
primäre oder sekundäre Alkylsulfonsäuren mit einer linearen, verzweigten oder cyclischen Alkylgruppe, die 6 bis 18 Kohlenstoffatome enthält, und/oder deren Salze

sowie Wasser und gegebenenfalls Stabilisatoren, Mittel zur Verbesserung der fungiziden Wirksamkeit und weitere übliche Zusatzstoffe enthält.

Das erfindungsgemäße Desinfektionsmittelkonzentrat ist sowohl in chemischer als auch in physikalischer Hinsicht stabil. Einerseits bleibt der Gehalt an Aktivsauerstoff in dem Konzentrat über lange Zeiträume erhalten. Andererseits tritt keine Phasentrennung auf; es bilden sich keine Niederschläge; die Bestandteile sind miteinander verträglich und bleiben gemeinsam über längere Zeiträume klar in Lösung. Die erfindungsgemäß eingesetzten Tenside unterstützen die Desinfektion und Reinigung und verstärken sie bis hin zu einer synergistischen Wirkungssteigerung.

Entgegen der Lehre der oben angesprochenen EP-A-188 025 eignen sich gemäß der vorliegenden Erfindung überraschenderweise gerade ausgesuchte, spezielle anionische Tenside zur Herstellung lagerstabiler, flüssiger Formulierungen von Peroxymonoschwefelsäure und deren Salzen.

Die überwiegende Mehrzahl der im Handel erhältlichen Tenside ist zur Herstellung von Desinfektionsmittelkonzentraten auf Basis von Peroxymonoschwefelsäure und deren Salzen nicht geeignet. Normalerweise zeigen Formulierungen aus 10 Gew.% Caroat, 2,5 Gew.% Tensid und 87,5 Gew.% Wasser eine Unverträglichkeit zwischen den Bestandteilen, was sich in Phasentrennung, Niederschlägen, Inhomogenität sowie Destabilisierung der Aktivsauerstoff-Verbindung zeigt. Angesichts der großen Zahl ungeeigneter Tenside ist es überraschend, das spezielle Tenside aufgefunden werden konnten, bei denen diese Unverträglichkeiten nicht auftreten.

Es ist erfindungsgemäß bevorzugt, daß die Aktivsauerstoffkomponente A) in Form des als Caroart bezeichneten Gemisches aus $KHSO_5$, $K_2SO_4$ und $KHSO_4$ in dem Desinfektionsmittelkonzentrat enthalten ist.

Die Konzentration der Aktivsauerstoffkomponente A) in dem Desinfektionsmittelkonzentrat kann zwischen 1 Gew.% und der Löslichkeitsgrenze liegen. Vorzugsweise beträgt die Konzentration der Aktivsauerstoffkomponente A) 5 bis 15 Gew.%.

Die zusätzlich gegebenenfalls eingesetzten primären oder sekundären Alkylsulfonsäuren enthalten vorzugsweise 8 bis 16 Kohlenstoffatome in der Alkylgruppe.

Bezüglich der als Tensidkomponente B) eingesetzten aromatischen Sulfonsäuren gemäß der Formel

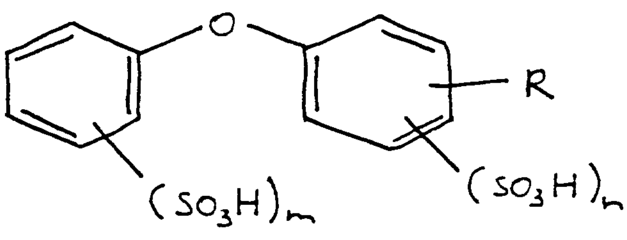

ist es bevorzugt, daß die Gruppe R ein linearer Alkylrest mit 10 bis 16 Kohlenstoffatomen ist.

Weiterhin ist es bevorzugt, daß in der Formel der aromatischen Sulfonsäure B) die Summe m + n = 2 ist.

Es ist auch bevorzugt, daß in der Formel der aromatischen Sulfonsäure B) die Alkylreste R in p-Stellung zur Ethersauerstoffbrücke angeordnet sind.

Bezüglich der Sulfonsäuresalze ist es bevorzugt, daß es sich um Alkali, Erdalkali und/oder Ammoniumsalze handelt.

In dem erfindungsgemäßen Desinfektionsmittelkonzentrat ist die Tensidkomponente B) üblicherweise in einer Menge von 0,1 bis 200%, vorzugsweise 1 bis 100% und besonders bevorzugt 5 bis 50%, bezogen auf das Gewicht der Aktivsauerstoffkomponente A), enthalten.

Zur Gewährleistung einer guten Stabilität des erfindungsgemäßen Desinfektionsmittelkonzentrats ist es von großer Bedeutung, daß der Gehalt an Chlorid in dem flüssigen Konzentrat einen oberen Grenzwert nicht überschreitet. Vorzugsweise enthält das erfindungsgemäße Desinfektionsmittelkonzentrat weniger als 0,5 Gew.% Chlorid. Andererseits können sehr geringe Gehalte an Chlorid stabilisierend wirken. Es ist daher besonders bevorzugt, daß das erfindungsgemäße Konzentrat einen Chlorid-Gehalt im Bereich von 0,005 bis 0,5 Gew.% aufweist.

Es kann zweckmäßig sein, dem erfindungsgemäßen Desinfektionsmittelkonzentrat Stabilisatoren zuzusetzen. Bestimmte Phosphonsäuren sind für diesen Zweck geeignet, insbesondere 1-Hydroxyethan-1,1-diphosphonsäure, Morpholinomethan-di-phosphonsäure oder Amino-tris-methylen-phosphonsäure. Auch Pyridincarbonsäuren sind geeignete Stabilisatoren, insbesondere Pyridin-2,6-dicarbonsäure. Schließlich können für diesen Zweck auch Pyrrolidonsäuren verwendet werden, insbesondere 2-Pyrrolidon-5-carbonsäure. Die genannten Stabilisatoren können auch in Form ihrer Salze oder in Kombination mit ihren Salzen eingesetzt werden. Es ist bevorzugt, daß die Stabilisatoren in dem erfindungsgemäßen Desinfektionsmittelkonzentrat in einer Konzentration von 0,01 bis 2 Gew.% enthalten sind.

Für bestimmte Anwendungen kann es wünschenswert sein, daß das erfindungsgemäße Desinfektionsmittelkonzentrat ein Mittel zur Verbesserung der fungiziden Wirksamkeit enthält. Die für diesen Zweck bevorzugten Mittel sind N-Octylisothiazol-3-on und/oder Benzoesäure und/oder Salze dieser Verbindungen. Diese Mittel zur Verbesserung der fungiziden Wirksamkeit sind vorzugsweise in einer Konzentration von 0,1 bis 3 Gew.% in dem erfindungsgemäßen Desinfektionsmittelkonzentrat enthalten.

Der Wassergehalt des erfindungsgemäßen Desinfektionsmittelkonzentrats liegt typischerweise im Bereich von 40 bis 99 Gew.%, vorzugsweise 60 bis 95 Gew.% und am meisten bevorzugt 80 bis 90 Gew.%.

Der pH-Wert des erfindungsgemäßen Desinfektionsmittelkonzentrates beträgt normalerweise 0 bis 6 und vorzugsweise 0,5 bis 2,5.

Die Erfindung betrifft auch die Verwendung des flüssigen Desinfektionsmittelkonzentrates zur Herstellung einer anwendungsfertigen Desinfektionsmittellösung durch Verdünnen mit Wasser. Üblicherweise wird das erfindungsgemäße Konzentrat zu diesem Zweck auf das 20 bis 400fache Volumen mit Wasser verdünnt. Die so hergestellte verdünnte, anwendungsfertige Desinfektionsmittellösung hat typischerweise einen pH-Wert im Bereich von 2 bis 4. Sie ist zum Desinfizieren in unterschiedlichsten Bereichen geeignet. Beispiele sind Flächen, Geräte, Instrumente, Materialien im medizinisch-ärztlichen Bereich, im industriellen und gewerblichen Bereich (z.B. Brauereien, Molkereien, Schlachthöfe, Pharma-Beriebe, Lebensmittel-Betriebe), in Haushalt, Küche, Sanitär-Bereich und im Veterinäre-Bereich. Das fertige Desinfektionsmittel kann u.a. auf folgende Arten zum Einsatz kommen: Sprühen, Wischen, Gießen, Tauchen, Einlegen, Hochdruckverfahen, Feuchttücher. Die Desinfektionsmittel können eingesetzt werden zur Reinigung, desinfizierenden Reinigung, Desinfektion, Keimreduktion. Die Desinfektionsmittel können mit geeigneten Reinigungs oder anderen Desinfektionsmitteln kombiniert zum Einsatz kommen. Die erfindungsgemäßen Desinfektionsmittellösungen sind breit wirksam, z.B. gegen Bakterien, Pilze, Hefen, Mykobakterien, behüllte und unbehüllte Viren, und zwar sowohl gegen die vegetativen Keime als auch gegen deren Dauerformen.

Dem erfindungsgemäßen Desinfektionsmittelkonzentrat können außerdem Farbstoffe, Riechstoffe und Korrosionsinhibitoren zugesetzt werden.

Im folgenden wird die Erfindung anhand von Beispielen näher erläutert.

<u>Beispiel 1</u>

| | |
|---|---|
| 87,5 Gew.% | Wasser, VE (voll entsalzt) |
| 10 Gew.% | Caroat |
| 2,5 Gew.% | einer 45 gew.%igen Lösung des Natriumsalzes der aromatischen Sulfonsäure B) |

Es wurde ein klares, schwach gelbliches und praktisch geruchsfreies Konzentrat erhalten, das auch nach einem Monat visuell unverändert war. Der Gehalt an $KHSO_5$ betrug unmittelbar nach der Herstellung 4,3 Gew.%. Nach einem Monat wurde ein Gehalt von 4,3 Gew.% gemessen. Nach 4 Monaten betrug der Gehalt 4,0 Gew.%.

<u>Beispiel 2</u>

| | |
|---|---|
| 87,3 Gew.% | Wasser, VE |
| 10 Gew.% | Caroat |
| 2,5 Gew.% | einer 45 gew.%igen Lösung des Natriumsalzes der aromatischen Sulfonsäure B) |
| 0,2 Gew.% | Amino-tris-methylenphosphonsäure. |

Es wurde ein klares, gelbliches und geruchsarmes Konzentrat erhalten, das nach einem Monat visuell unverändert war. Unmittelbar nach der Herstellung wurde ein $KHSO_5$-Gehalt von 4,4 Gew.% gemessen. Der Gehalt betrug nach einem Monat und nach 4 Monaten jeweils 4,0 Gew.%.

Beispiel 3

| | |
|---|---|
| 87,3 Gew.% | Wasser, VE |
| 10 Gew.% | Caroat |
| 2,5 Gew.% | einer 45 Gew.% Lösung des Natriumsalzes der aromatischen Sulfonsäure B) |
| 0,1 Gew.% | Pyridin-2,6-dicarbonsäure |
| 0,1 Gew.% | Amino-tris-methylenphosphonsäure. |

Es wurde ein klares, gelbliches und geruchsarmes Konzentrat erhalten, das nach einem Monat visuell unverändert war. Unmittelbar nach der Herstellung wurde ein $KHSO_5$-Gehalt von 4,3 Gew.% gemessen. Nach einem Monat betrug der Gehalt 4,2 Gew.% nach 4 Monaten bei Raumtemperatur betrug der Gehalt 3,9 Gew.%.

Die vorstehenden Beispiele 1 bis 3 belegen die gute Stabilität der erfindungsgemäßen Desinfektionsmittelkonzentrate. Die folgenden Beispiele veranschaulichen die Verwendung der erfindungsgemäßen Desinfektionsmittelkonzentrate zur Herstellung von Gebrauchslösungen, welche gute Desinfektionsmittel sind.

Beispiel 4

| | |
|---|---|
| 85,3 Gew.% | Wasser, VE |
| 12,0 Gew.% | Caroat |
| 2,5 Gew.% | einer 45 gew.%igen Lösung des Natriumsalzes der aromatischen Sulfonsäure B) |
| 0,2 Gew.% | Amino-tris-methylenphosphonsäure. |

Aus den genannten Bestandteilen wurde ein klares, schwach gelbliches und praktisch geruchsfreies Desinfektionsmittelkonzentrat erhalten. Aus diesem Konzentrat wurden durch Verdünnen mit Wasser Gebrauchslösungen hergestellt, die 3,00, 2,00, 1,00, 0,50 und 0,25 Vol% des Konzentrats enthielten. (Natürlich kann, falls erforderlich, auch eine höhere Konzentration zum Einsatz kommen, z.B. bei hoher Schmutzbelastung oder resistenten Keimen.)

Mit diesen Gebrauchslösungen unterschiedlicher Verdünnung wurden Suspensionversuche gemäß den Richtlinien für die Prüfung chemischer Desinfektionsmittel, herausgegeben von der Deutschen Veterinärmedizinischen Gesellschaft e.V., bearbeitet vom Ausschuß "Desinfektion in der Veterinärmedizin", Neufassung 1984 durchgeführt. Die Versuche wurde einerseits ohne Eiweißbelastung, andererseits mit Eiweißbelastung, und zwar einmal mit 10% Rinderserum und einmal mit 20% Rinderserum vorgenommen. Die Ergebnisse sind in der folgenden Tabelle I wiedergegeben. Die Zahlenangaben in der Tabelle bedeuten die jeweilige Einwirkzeit, welche zur Abtötung der Keime erforderlich war.

Aus der Tabelle ist die gute Desinfektionswirkung der erfindungsgemäß hergestellten Gebrauchslösungen ersichtlich.

Tabelle I

| Einsatzkonz. [%] | Staph. aureus | Strept. faecium | Ps. aeruginosa | Prot. vulgaris | C. albicans | A. niger | |
|---|---|---|---|---|---|---|---|
| 3,00 | | | | | 5 | 15 | ohne Serum |
| 2,00 | 5 | 5 | 5 | 5 | 5 | 15 | |
| 1,00 | 5 | 5 | 5 | 5 | 5 | > 60 | |
| 0,50 | 5 | 5 | 5 | 5 | 15 | > 60 | |
| 0,25 | 30 | 15 | 15 | 15 | | | |
| 3,00 | | | | | > 60 | > 60 | mit 10 % Serum |
| 2,00 | 30 | 15 | 15 | 5 | > 60 | > 60 | |
| 1,00 | > 60 | 30 | 30 | 15 | > 60 | > 60 | |
| 0,50 | > 60 | > 60 | > 60 | 60 | > 60 | > 60 | |
| 0,25 | > 60 | > 60 | > 60 | > 60 | | | |
| 3,00 | | | | | > 60 | > 60 | mit 20 % Serum |
| 2,00 | 60 | 30 | 30 | 5 | > 60 | > 60 | |
| 1,00 | > 60 | > 60 | > 60 | 15 | > 60 | > 60 | |
| 0,50 | > 60 | > 60 | > 60 | > 60 | > 60 | > 60 | |
| 0,25 | > 60 | > 60 | > 60 | > 60 | | | |

<u>Beispiel 5</u>

| | |
|---|---|
| 80,8 Gew.% | Wasser, VE |
| 12,0 Gew.% | Caroat |
| 5,0 Gew.% | einer 45 gew.%igen Lösung des Natriumsalzes der aromatischen Sulfonsäure B) |
| 0,2 Gew.% | Amino-tris-methylenphosphonsäure |
| 0,2 Gew.% | Benzoesäure |
| 2,0 Gew.% | eines Gemisches aus 45 Gewichtsteilen N-Octylisothiazolon und 55 Gewichtsteilen 1,2-Propylenglykol. |

Aus den genannten Bestandteilen wurde ein klares Desinfektionsmittelkonzentrat erhalten. Aus dem Konzentrat wurde durch Verdünnen mit Wasser Gebrauchslösungen hergestellt, die 3, 2 und 1 Vol% des Konzentrats enthielten.

Die Gebrauchslösungen unterschiedlicher Verdünnung wurden im Suspensionsversuch gemäß den "Richtlinien für die Prüfung und Bewertung chemischer Desinfektionsverfahren der Deutschen Gesellschaft für Hygiene und Mikrobiologie untersucht (vergl. Zentralblatt für Bakteriologie, Mikrobiologie und Hygiene, Reihe B: Hygiene, Umwelthygiene, Krankenhaushygiene, Arbeitshygiene, Präventive Medizin; Band 172, Heft 6 (1981)).

Die Versuche wurden mit Candida albicans und mit aspergillus niger durchgeführt. Sie wurden mit und ohne Eiweißbelastung, letztere mit 10% Rinderserum vorgenommen.

Die Ergebnisse sind in der folgenden Tabelle II wiedergegeben. Aus der Tabelle ist ersichtlich, daß dieses Desinfektionsmittel eine verbesserte fungizide Wirksamkeit aufwies.

Tabelle II

| | Einsatz Konz. [%) | Candida albicans | Aspergillus niger |
|---|---|---|---|
| ohne Serum | 3 | 5 | 5 |
| | 2 | 5 | 5 |
| | 1 | 5 | 5 |
| mit 10 % Serum | 3 | 5 | 30 |
| | 2 | 5 | 30 |
| | 1 | 30 | 30 |

Beispiele 6 bis 10

Es wurden Desinfektionsmittelkonzentrate mit Zusammensetzungen gemäß Tabelle III hergestellt. Es wurden geruchsarme Konzentrate erhalten, deren visuelle Beschaffenheit unmittelbar nach der Herstellung sich aus der Tabelle III ergibt. Proben dieser Konzentrate wurden 9 Monate lang bei Raumtemperatur (RT) und bei leicht erhöhter Temperatur (40°) aufbewahrt. In der Tabelle III ist die Veränderung des Gehaltes an $KHSO_5$ in Abhängigkeit von der Aufbewahrungstemperatur und der Zeit wiedergegeben. Außerdem ist die visuelle Beschaffenheit nach 9 Monaten angegeben.

Die Beispiele 6 bis 10 zeigen, daß sich ein geringer Gehalt an Chlorid in dem Konzentrat günstig auf die Stabilität auswirkt.

**Tabelle III**

| Beispiel Nr. | 6 | | 7 | | 8 | | 9 | | 10 | |
|---|---|---|---|---|---|---|---|---|---|---|
| Zusammensetzung (Gew.%) | | | | | | | | | | |
| Wasser, VE | 85,1 | | 84,9 | | 84,7 | | 84,3 | | 83,9 | |
| Caroat | 12,0 | | 12,0 | | 12,0 | | 12,0 | | 12,0 | |
| 45 gew.%ige Lösung des Natriumsalzes B) III) der aromatischen Sulfonsäure B) II) | 2,5 | | 2,5 | | 2,5 | | 2,5 | | 2,5 | |
| Amino-tris-methylenphosphonsäure | 0,2 | | 0,2 | | 0,2 | | 0,2 | | 0,2 | |
| Benzoesäure | 0,2 | | 0,2 | | 0,2 | | 0,2 | | 0,2 | |
| 10 %ige Lösung von NaCL in VE-Wasser | - | | 0,2 | | 0,4 | | 0,8 | | 1,2 | |
| Aufbewahrungs-Temperatur (°C) | RT | 40°C | RT | 40°C | RT | 40°C | RT | 40°C | RT | 40°C |
| Visuelle Beschaffenheit | | | | | | | | | | |
| unmittelbar nach der Herstellung | klar | | klar, | leicht gelblich | klar, | gelblich | klar, | gelblich | klar, | gelblich |
| nach 9 Monaten | klar | klar | klar | klar | klar | klar | klar | trüb | klar | trüb |
| $KHSO_5$-Gehalt (Gew.%) | | | | | | | | | | |
| unmittelbar nach der Herstellung | 5,1 | | 4,8 | | 4,7 | | 4,7 | | 4,5 | |
| nach 4 Tagen | 4,9 | | 4,8 | | 4,6 | | 4,6 | | 4,4 | |
| nach 1 Monat | 5,1 | 3,9 | 5,1 | 4,2 | 4,9 | 4,1 | 4,8 | 4,0 | 4,5 | 2,1 |
| nach 3 Monaten | 5,0 | 2,6 | 4,8 | 3,0 | 4,7 | 3,0 | 4,6 | 3,0 | 3,9 | 0,9 |
| nach 9 Monaten | 4,1 | 0,4 | 4,4 | 0,6 | 4,3 | 0,6 | 4,3 | 0,7 | 2,6 | 0,1 |

**Patentansprüche**

1. Flüssiges Desinfektionsmittelkonzentrat, dadurch gekennzeichnet, daß es

   A) als Aktivsauerstoffkomponente Peroxymonoschwefelsäure und/oder deren Salze,

   B) als Tensidkomponente überwiegend oder ausschließlich aromatischen Sulfonsäuren der Formel

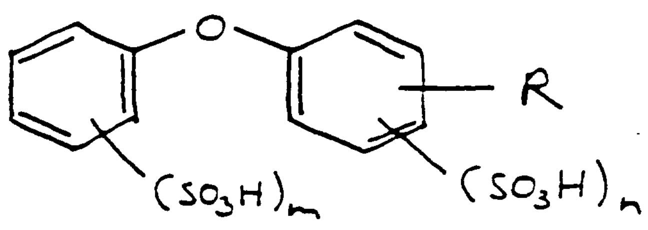

   in der R ein verzweigter oder linearer Alkylrest mit 8 bis 18 Kohlenstoffatomen ist und m und n jeweils 0 oder 1 mit der Maßgabe sind, daß die Summe m + n entweder 1 oder 2 ist, und/oder deren Salze,
   und gegebenenfalls zusätzlich
   primäre oder sekundäre Alkylsulfonsäuren mit einer linearen, verzweigten oder cyclischen Alkylgruppe, die 6 bis 18 Kohlenstoffatome enthält, und/oder deren Salze

   sowie Wasser und gegebenenfalls Stabilisatoren, Mittel zur Verbesserung der fungiziden Wirksamkeit und weitere übliche Zusatzstoffe enthält.

2. Flüssiges Desinfektionsmittelkonzentrat nach Anspruch 1, **dadurch gekennzeichnet**, daß die Aktivsauerstoffkomponente A) in Form eines Gemisches aus $KHSO_5$, $K_2SO_4$ und $KHSO_4$ (Caroat) enthalten ist.

3. Flüssiges Desinfektionsmittelkonzentrat nach Anspruch 1 oder 2, **dadurch gekennzeichnet**, daß die Konzentration der Aktivsauerstoffkomponente A) zwischen 1 Gew.% und Löslichkeitsgrenze liegt.

4. Flüssiges Desinfektionsmittelkonzentrat nach Anspruch 3, **dadurch gekennzeichnet**, daß die Konzentration der Aktivsauerstoffkomponente A) 5 bis 15 Gew.% beträgt.

5. Flüssiges Desinfektionsmittelkonzentrat nach einem der vorhergehenden Ansprüche, **dadurch gekennzeichnet**, daß in der Formel der aromatischen Sulfonsäure B) die Gruppe R ein linearer Alkylrest mit 10 bis 16 Kohlenstoffatomen ist.

6. Flüssiges Desinfektionsmittelkonzentrat gemäß einem der vorhergehenden Ansprüche, **dadurch gekennzeichnet**, daß in der Formel der aromatischen Sulfonsäure B) die Summe m + n = 2 ist.

7. Flüssiges Desinfektionsmittelkonzentrat nach einem der vorhergehenden Ansprüche, **dadurch gekennzeichnet**, daß in der Formel der aromatischen Sulfonsäure B) die Alkylreste R in p-Stellung zur Ethersauerstoffbrücke angeordnet sind.

8. Flüssiges Desinfektionsmittelkonzentrat nach einem der vorhergehenden Ansprüche, **dadurch gekennzeichnet**, daß die primären oder sekundären Alkylsulfonsäuren 8 bis 16 Kohlenstoffatome in der Alkylgruppe enthalten.

9. Flüssiges Desinfektionsmittelkonzentrat nach einem der vorhergehenden Ansprüche, dadurch gekennzeichnet, daß die Sulfonsäuresalze Alkali-, Erdalkali- und/oder Ammoniumsalze sind.

10. Flüssiges Desinfektionsmittelkonzentrat nach einem der vorhergehenden Ansprüche, **dadurch gekennzeichnet**, daß es die Tensidkomponente B) in einer Menge von 0,1 bis 200 %, bezogen auf das Gewicht der Aktivsauerstoffkomponente A), enthält.

11. Flüssiges Desinfektionsmittelkonzentrat nach einem der vorhergehenden Ansprüche, **dadurch gekennzeichnet**, daß es nicht mehr als 0,5 Gew.% Chlorid enthält.

12. Flüssiges Desinfektionsmittelkonzentrat nach Anspruch 11, **dadurch gekennzeichnet**, daß es 0,005 bis 0,5 Gew.% Chlorid enthält.

13. Flüssiges Desinfektionsmittelkonzentrat nach einem der vorhergehenden Ansprüche, dadurch gekennzeichnet, daß es 40 bis 90 Gew.% Wasser enthält.

14. Flüssiges Desinfektionsmittelkonzentrat nach einem der vorhergehenden Ansprüche, **dadurch gekennzeichnet**, daß es als Stabilisatoren Phosphonsäuren, insbesondere 1-Hydroxyethan-1,1-diphosphonsäure, Morpholinomethan-Diphosphonsäure oder Amino-tris-methylenphosphonsäure, Pyridincarbonsäuren, insbesondere Pyridin-2,6-dicarbonsäure, Pyrollidoncarbonsäuren, insbesondere 2-Pyrollidon-5-carbonsäure und/oder deren Salze enthält.

15. Flüssiges Desinfektionsmittelkonzentrat nach einem der vorhergehenden Ansprüche, **dadurch gekennzeichnet**, daß es Stabilisatoren in einer Konzentration von 0,01 bis 2 Gew.% enthält.

16. Flüssiges Desinfektionsmittelkonzentrat nach einem der vorhergehenden Ansprüche, **dadurch gekennzeichnet**, daß es als Mittel zur Verbesserung der fungiziden Wirksamkeit N-Octylisodiazol-3-on und/oder Benzoesäure und/oder ein Salz dieser Verbindungen enthält.

17. Flüssiges Desinfektionsmittelkonzentrat nach Anspruch 16, **dadurch gekennzeichnet**, daß es das Mittel zur Verbesserung der fungiziden Wirksamkeit in einer Konzentration von 0,1 bis 3 Gew.% enthält.

18. Flüssiges Desinfektionsmittelkonzentrat nach einem der vorhergehenden Ansprüche, **dadurch gekennzeichnet,** daß es einen pH-Wert von 0 bis 6 hat.

19. Flüssiges Desinfektionsmittelkonzentrat nach Anspruch 18, **dadurch gekennzeichnet**, daß es einen pH-Wert von 0,5 bis 2,5 hat.

20. Verwendung des flüssigen Desinfektionsmittelkonzentrats gemäß einem der Ansprüche 1 bis 19 zur Herstellung einer anwendungsfertigen Desinfektionsmittellösung durch Verdünnen mit Wasser.

21. Verwendung nach Anspruch 20, **dadurch gekennzeichnet**, daß man das flüssige Desinfektionsmittelkonzentrat 20 bis 400fach verdünnt.

**Claims**

1. Liquid disinfectant concentrate, characterized in that it contains

   a) peroxymonosulphuric acid and/or salts thereof as active oxygen component,

   b) as surfactant component, predominantly or exclusively aromatic sulphonic acids of the formula

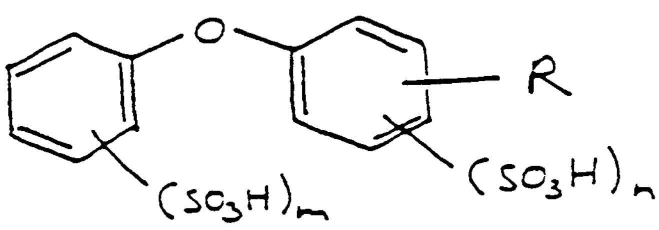

   in which R is a branched or linear alkyl radical with 8 to 18 carbon atoms and m and n are in each case 0 or 1 with the proviso that the sum of m + n is either 1 or 2, and/or salts thereof,
   and optionally additionally
   primary or secondary alkyl sulphonic acids with a linear, branched or cyclic alkyl group which contains 6 to 18 carbon atoms, and/or salts thereof,

and water and optionally stabilizers, agents for improving fungicidal effectiveness and other customary additives.

2. Liquid disinfectant concentrate according to Claim 1, characterized in that the active oxygen component A) is contained in the form of a mixture of $KHSO_5$, $K_2SO_4$ and $KHSO_4$ (caroat).

3. Liquid disinfectant concentrate according to Claim 1 or 2, characterized in that the concentration of the active oxygen component A) lies between 1 wt.% and the limit of solubility.

4. Liquid disinfectant concentrate according to Claim 3, characterized in that the concentration of the active oxygen component A) is 5 to 15 wt.%.

5. Liquid disinfectant concentrate according to one of the preceding claims, characterized in that in the formula of the aromatic sulphonic acid B) the group R is a linear alkyl radical with 10 to 16 carbon atoms.

6. Liquid disinfectant concentrate according to one of the preceding claims, characterized in that in the formula of the aromatic sulphonic acid B) the sum of $m + n = 2$.

7. Liquid disinfectant concentrate according to one of the preceding claims, characterized in that in the formula of the aromatic sulphonic acid B) the alkyl radicals R are arranged in the p-position relative to the ether oxygen bridge.

8. Liquid disinfectant concentrate according to one of the preceding claims, characterized in that the primary or secondary alkyl sulphonic acids contain 8 to 16 carbon atoms in the alkyl group.

9. Liquid disinfectant concentrate according to one of the preceding claims, characterized in that the sulphonic acid salts are alkali salts, alkaline earth salts and/or ammonium salts.

10. Liquid disinfectant concentrate according to one of the preceding claims, characterized in that it contains the surfactant component B) in a quantity of 0.1 to 200 %, relative to the weight of the active oxygen component A).

11. Liquid disinfectant concentrate according to one of the preceding claims, characterized in that it contains no more than 0.5 wt.% chloride.

12. Liquid disinfectant concentrate according to Claim 11, characterized in that it contains 0.005 to 0.5 wt.% chloride.

13. Liquid disinfectant concentrate according to one of the preceding claims, characterized in that it contains 40 to 90 wt.% water.

14. Liquid disinfectant concentrate according to one of the preceding claims, characterized in that it contains as stabilizers phosphonic acids, in particular 1-hydroxyethane-1,1-diphosphonic acid, morpholinomethane-diphosphonic acid or amino-tris-methylenephosphonic acid, pyridinecarboxylic acids, in particular pyridine-2,6-dicarboxylic acid, pyrrolidonecarboxylic acids, in particular 2-pyrrolidone-5-carboxylic acid and/or salts thereof.

15. Liquid disinfectant concentrate according to one of the preceding claims, characterized in that it contains stabilizers in a concentration of 0.01 to 2 wt.%.

16. Liquid disinfectant concentrate according to one of the preceding claims, characterized in that it contains N-octylisodiazol-3-one and/or benzoic acid and/or a salt of these compounds as an agent for improving fungicidal effectiveness.

17. Liquid disinfectant concentrate according to Claim 16, characterized in that it contains the agent for improving fungicidal effectiveness in a concentration of 0.1 to 3 wt.%.

18. Liquid disinfectant concentrate according to one of the preceding claims, characterized in that it has a pH value of 0 to 6.

19. Liquid disinfectant concentrate according to Claim 18, characterized in that it has a pH value of 0.5 to 2.5.

20. Use of the liquid disinfectant concentrate according to one of Claims 1 to 19 for the preparation of a ready-to-use

disinfectant solution by dilution with water.

21. Use according to Claim 20, characterized in that the liquid disinfectant concentrate is diluted 20 to 400 times.

## Revendications

1. Un concentré désinfectant liquide caractérisé en ce qu'il contient :

A) comme composant oxygéné actif de l'acide peroxymonosulfurique et/ou ses sels,
B) comme composant tensioactif de préférence ou exclusivement des sels sulfoniques aromatiques de formule

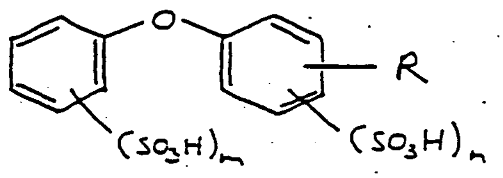

dans laquelle R représente un radical alkyle ramifié ou linéaire comportant de 8 à 18 atomes de carbone et m et n sont chacun égaux à 0 ou 1 sous réserve que la somme m + n soit égale à 1 ou 2, et/ou leurs sels,
et le cas échéant encore
des acides alkylsulfoniques primaires ou secondaires renfermant un groupe alkyle linéaire, ramifié, ou cyclique, comportant de 6 à 18 atomes de carbone ou leurs sels,

ainsi que de l'eau et éventuellement des stabilisants, des agents d'amélioration de l'efficacité fongicide et d'autres additifs usuels.

2. Un concentré désinfectant liquide selon la revendication 1, caractérisé en ce que le composant oxygéné actif A) est présent sous forme d'un mélange de $KHSO_5$, $K_2SO_4$ et $KHSO_4$ (Caroate).

3. Un concentré désinfectant liquide selon la revendication 1 ou 2, caractérisé en ce que la concentration en composant oxygéné actif A) est comprise entre 1% en poids et la limite de solubilité.

4. Un concentré désinfectant liquide selon la revendication 3, caractérisé en ce que la concentration dit composant oxygéné actif A) s'élève à 5 à 15% en poids.

5. Un concentré désinfectant liquide selon l'une quelconque des revendications précédentes, caractérisé en ce que dans la formule de l'acide sulfonique aromatique B) le groupe R représente un radical alkyle linéaire comprenant de 10 à 16 atomes de carbone.

6. Un concentré désinfectant liquide selon l'une quelconque des revendications précédentes, caractérisé en ce que dans la formule de l'acide sulfonique aromatique B), la somme m + n est égale à 2.

7. Un concentré désinfectant liquide selon l'une quelconque des revendications précédentes, caractérisé en ce que dans la formule de l'acide sulfonique aromatique B), les radicaux alkyle occupent une position p-par rapport au pont oxygène de l'éther.

8. Un concentré désinfectant liquide selon une quelconque des revendications précédentes, caractérisé en ce que les acides alkyle primaire ou secondaire sulfoniques comportant de 8 à 16 atomes de carbone dans le groupe alkyle.

9. Un concentré désinfectant liquide selon l'une quelconque des revendications précédentes, caractérisé en ce que les sels d'acide sulfonique sont des sels alcalins, alcalino-terreux ou des sels d'ammonium.

10. Un concentré désinfectant liquide selon l'une quelconque des revendications précédentes, caractérisé en ce qu'il contient le composant tensioactif B) en quantités de 0,1 à 200% par rapport au poids du composant A) oxygéné actif A.

**11.** Un concentré désinfectant liquide selon l'une quelconque des revendications précédentes, caractérisé en ce qu'il ne contient pas plus de 0,5% en poids de chlorure.

**12.** Un concentré désinfectant liquide selon l'une quelconque des revendications précédentes, caractérisé en ce qu'il contient de 0,005 à 0,5% en poids de chlorure.

**13.** Un concentré désinfectant liquide selon l'une quelconque des revendications précédentes, caractérisé en ce qu'il contient de 40 à 90% en poids d'eau.

**14.** Un concentré désinfectant liquide selon l'une quelconque des revendications précédentes, caractérisé en ce qu'il contient, comme stabilisant, des acides phosphoniques, notamment l'acide 1-hydroxyéthane-1,1-diphosphonique, l'acide morpholinométhane-di-phosphonique ou l'acide amino-tris-méthylène phosphonique, des acides pyridine carboxyliques, notamment l'acide pyridine 2,6-dicarboxylique, des acides pyrollidone carboxyliques, notamment l'acide 2-pyrollidone-5-carboxylique et/ou leurs sels.

**15.** Un concentré désinfectant liquide selon l'une quelconque des revendications précédentes caractérisé en ce qu'il contient des stabilisants à une concentration de 0,01 à 2% en poids.

**16.** Un concentré désinfectant liquide selon l'une quelconque des revendications précédentes, caractérisé en ce qu'il contient, comme agent d'amélioration de l'efficacité fongicide, de la N-octylisodiazol-3-one et/ou de l'acide benzoïque et/ou un sel de ces dérivés.

**17.** Un concentré désinfectant liquide selon la revendication 16, caractérisé en ce qu'il contient l'agent d'amélioration de l'efficacité fongicide en concentration de 0,1 à 3% en poids.

**18.** Un concentré désinfectant liquide selon l'une quelconque des revendications précédentes, caractérisé en ce qu'il présente une valeur de pH de 0 à 6.

**19.** Un concentré désinfectant liquide selon la revendication 18, caractérisé en ce qu'il présente une valeur de pH de 0,5 à 2,5.

**20.** Utilisation du concentré désinfectant selon l'une quelconque des revendications 1 à 19, pour la préparation d'une solution de désinfectant prête à l'emploi par dilution à l'eau.

**21.** Utilisation selon la revendication 20, caractérisée en ce que l'on dilue de 20 à 400 fois le concentré désinfectant liquide.